# EUROPEAN PATENT SPECIFICATION

(11) **EP 4 471 199 B1**
(45) Date of publication and mention of the grant of the patent: **21.01.2026**
(21) Application number: 24173554.7
(22) Date of filing: 30.04.2024
(51) Int. Cl.: D03D 47/27

(54) **GRIPPER WEAVING LOOM INCLUDING A WEAR MONITORING DEVICE OF THE FRONT PORTION OF GRIPPER CONTROL STRAPS**
GREIFERWEBMASCHINE MIT EINER VERSCHLEISSÜBERWACHUNGSVORRICHTUNG DES VORDEREN TEILS VON GREIFERSTEUERUNGSBÄNDERN
MÉTIER À TISSER À GRIFFES AVEC UN DISPOSITIF DE SURVEILLANCE DE L'USURE DE LA PARTIE AVANT DES BANDES DE COMMANDE DE GRIFFES

(30) Priority: 31.05.2023 IT 202300011055
(43) Date of publication of application: 04.12.2024
(73) Proprietor: ITEMA S.p.A., 24020 Colzate (BG) (IT)
(72) Inventor: ALGHISI, Francesco, 24020 Colzate (BG) (IT); NOZZA, Davide, 24020 Colzate (BG) (IT); PARIS, Thomas, 24020 Colzate (BG) (IT)
(74) Representative: Faggioni, Marco

(56) References cited:
- EP-A1- 0 341 522
- EP-A1- 4 008 817
- EP-B1- 1 766 118

## Description

### FIELD OF INVENTION

The present invention refers to a weaving loom including a wear monitoring device of gripper control flexible straps. In particular, the invention refers to a monitoring device capable of monitoring the wear condition of the front portion of gripper control flexible straps and sending a warning signal to the central control system of the loom before the wear of such portion of a gripper control flexible strap reaches such an extent to endanger the loom regular operation, especially in the step of weft thread exchange between the carrying gripper and the drawing gripper. In the following, for the sake of brevity, the gripper control flexible straps will be referred to as "gripper straps".

### STATE OF THE PRIOR ART

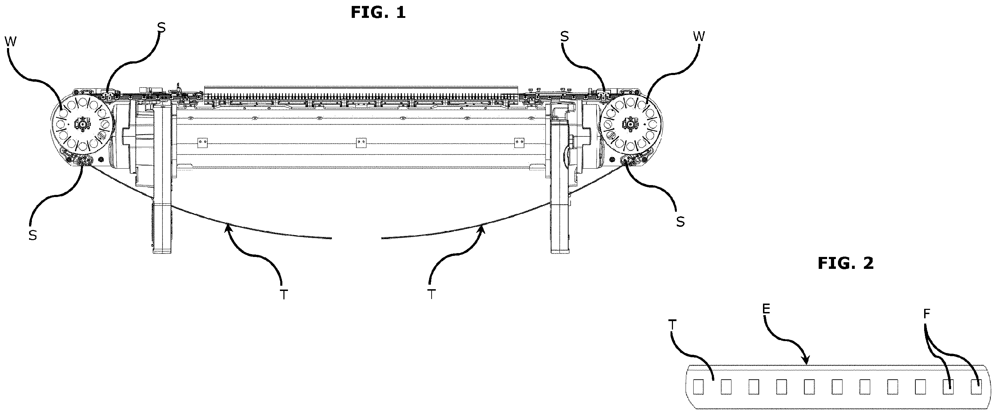

As it is known to those skilled in the art, and as schematically represented in Fig. 1, in gripper weaving looms the alternating movement of the carrying gripper and the drawing gripper, to insert a weft thread into the shed formed by the warp threads, is driven by means of two gripper straps T at one end of which a carrying gripper or, respectively, a drawing gripper is fixed. The alternating movement is transmitted to each of the two gripper straps T by a respective toothed wheel W, the teeth of which engage on a continuous series of slots F formed along a middle portion of the gripper strap T. Therefore, during operation, the gripper strap T behaves as a flexible rack controlled by a toothed wheel; as a matter of fact, a pair of metallic sliding guides S forces the gripper strap T to flex in adherence around a sector of the toothed wheel W, said sector being large enough to transmit the movement to the gripper strap T without originating excessively high local stresses on the slots F, and to direct the gripper strap T towards an area under the loom when the carrying gripper and the drawing gripper are in a position outside the shed.

Since the gripper strap T is inclined to elastically maintain its original rectilinear shape, its deformation around the toothed wheel W by the sliding guides S causes a continuous sliding friction between the surface of the sliding guides S and the gripper strap T outer surface. Then, further friction phenomena occur between the lateral edges of the gripper strap T and hooks, or other metallic guide elements G arranged along the shed, which allow the gripper strap T to be brought back and kept into its rectilinear shape, guiding it into the desired direction across the shed. The friction developed by the fast sliding of the gripper strap T in the sliding guides S and in the guide elements G results in a progressive wear of the gripper strap T surface until the gripper strap itself can no longer be safely used.

However, the gripper strap wear is not a regular phenomenon, since it is conditioned by several concurrent factors, which collectively cause its progression rate and include:
- loom operating speed;
- working temperature;
- existing clearance between the gripper strap and the guide elements;
- improper assembly of the gripper strap;
- improper adjustments of the loom.

Therefore, predicting the best time for replacing the gripper strap is currently a delicate operation, which requires intervention of a specialized textile worker who knows how to correctly evaluate the remaining useful service life of the gripper strap based on its external appearance. As a matter of fact, a premature replacement of the gripper strap obviously leads to a waste of resources and an economic damage, while the prolonged use of an already excessively worn gripper strap entails serious risks of failure of the gripper strap itself, or of interference between the grippers during the weft thread exchange, with consequent possible damage to the textile article being processed and/or to other parts and devices of the weaving loom.

EP-0.341.522 discloses a monitoring system of the wear condition of gripper straps, wherein each gripper strap is provided with internal layers or inserts through the thickness of the strap and arranged along a length of the strap, apt to provide optical, electric, or magnetic signals indicating the wear condition of the straps in response to the action of appropriate detectors.

EP-3.754.068 discloses a monitoring system of the wear condition of gripper straps, wherein the variations over time of a strap optical profile are compared, which profile is obtained by illuminating the strap with a light radiation source at a predefined wavelength and detecting the intensity of the reflected light radiation, which is variable along the strap profile, converted into a digital electrical signal. Therefore, the control system disclosed by this patent does not require the strap to have a predefined structure, nor the strap structure to be known a priori, and therefore allows to significantly expand the field of application of the previous patent EP-0.341.522.

Therefore, both these known systems are apt to provide accurate reporting of the wear condition along the strap body, thus enabling the textile worker to identify the most appropriate time to replace the strap.

In the practical application of this last control system of the strap wear condition, the Applicant has however noticed that the gripper straps very frequently show an increased wear in correspondence with their front portion, i.e. the portion on which the carrying gripper or, respectively, the drawing gripper are mounted, due to the fact that this area of the gripper strap is in contact with the guide elements G of the strap for a longer time than the gripper strap areas which are progressively further away from the gripper. Furthermore, as a gripper is mounted on the strap front portion introducing on this specific portion of the strap additional forces which are transversal to the strap movement direction. Such additional forces are generated both by the offset position of the gripper centre of gravity with respect to the strap and by the contact between the gripper and the warp threads during the return run along the guide elements G. This increased wear occurs particularly at the edges of the gripper strap front area, due to the friction of said edges against the gripper strap guide elements G.

Furthermore, the wear condition of the gripper strap edges is not specifically detected by the existing control systems mentioned above and is not even immediately visible to a non-skilled textile worker; a visual evaluation or a manual measuring of the wear condition of the gripper strap edges, therefore, requires stopping the loom and extracting the gripper strap from its guides, which are complex and expensive operations. A negative consequence of such situation is that replacement of the gripper straps is often implemented when the maximum wear limits of their edges, as indicated in use and maintenance manual, have already been exceeded, thus causing a deterioration of the loom performance, with increased number of wrong wefts and possible greater risk of damage to the loom members during the weft thread exchange between the carrying gripper and the drawing gripper.

The technical problem addressed by the present invention is therefore to provide a monitoring device for a weaving loom which allows to continuously monitor the wear condition of the front portion of gripper straps and, namely, of the guided outer edge of said gripper straps.

Within this technical problem, a first object of the present invention is to provide a monitoring device which is apt to measure the wear condition of a gripper strap front portion without unmounting the gripper straps from the weaving loom or interrupt the ongoing weaving processing.

Another object of the present invention is also to provide a monitoring device having an extremely small size, which monitoring device can therefore be installed without problems in a weft insertion/arrival area of the weaving loom, which area is known as already particularly crowded with devices and accessories.

Another object of the present invention is to further provide a monitoring device which does not need contact with the gripper strap or the grippers themselves, not to introduce further friction and/or wear phenomena.

Finally, a further object of the invention is to provide a monitoring device which is insensitive to local environmental conditions - such as dust, temperature, humidity, light - which are in fact subject to wide variations depending on the type of processing, the external atmospheric conditions, and the internal environmental conditions.

### SUMMARY OF THE INVENTION

This problem is solved, and these objects achieved by means of a weaving loom which includes a wear monitoring device of the front portion of the gripper straps having the features defined in claim 1. Other preferred features of said monitoring device are defined in the secondary claims.

### BRIEF DESCRIPTION OF THE DRAWINGS

Further features and advantages of the wear monitoring device of the front portion of the gripper straps according to the present invention will anyhow become more evident from the following detailed description of a preferred embodiment thereof, given by mere way of non-limiting example and illustrated in the accompanying drawings, wherein:
Fig. 1 is a schematic front view of a gripper weaving loom, illustrating the essential elements of the weft insertion system described in the introductory portion of the present description;
Fig. 2 is a plan view of a segment of a gripper strap;
Fig. 3A is a schematic cross-sectional view of a gripper strap front portion and of a carrying gripper attached thereto, in absence of wear (new gripper strap);
Fig. 3B is a view like Fig. 3A under an advanced wear condition (worn gripper strap);
Fig. 4 is a perspective view, on the side of the carrying gripper, of the monitoring device of the present invention and of the carrying gripper, during the return run from the shed;
Fig. 5 is a plan view of the monitoring device of Fig. 4;
Fig. 6 is a perspective view, on the side of the drawing gripper, of the monitoring device of the present invention and of the drawing gripper, during the return run from the shed;
Fig. 7 is a plan view of the monitoring device of Fig. 6; and
Fig. 8 is a plot illustrating the magnetic flux variations of the monitoring device of the invention during the passage of the grippers in front of the same, under different wear conditions of the gripper strap.

### DETAILED DESCRIPTION OF THE PREFERRED EMBODIMENT

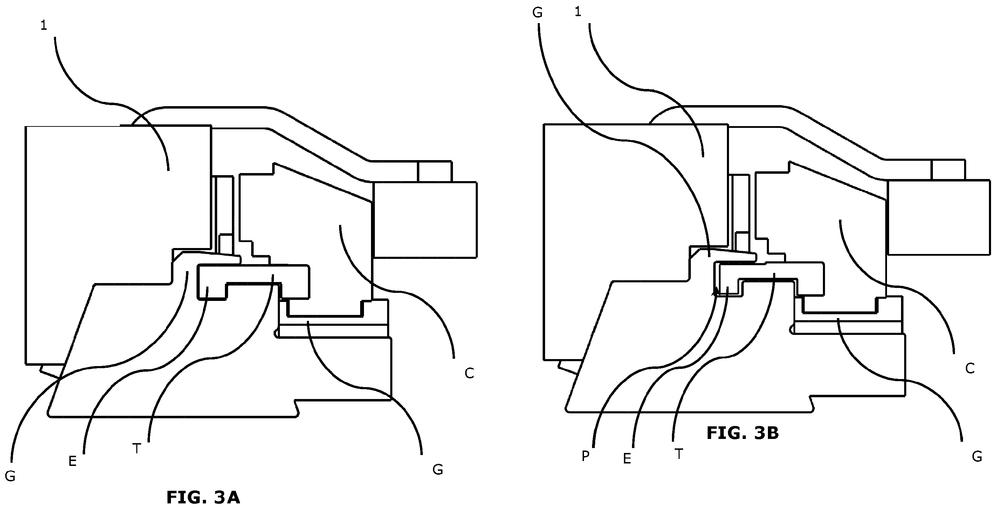

According to the present invention, in order to solve the problem highlighted above by means of a solution which is constructively simple, particularly compact, and completely insensitive to local environmental conditions, a wear monitoring device of the gripper strap wear condition is used, which detects the lateral clearance P (Fig. 3B) between the guided outer edge E of the front portion of the gripper strap T and a respective guide element G, which clearance is progressively caused by the gripper strap T wear. This lateral clearance P is indirectly detected by measuring the lateral displacement of the carrying gripper or the drawing gripper - which are both rigidly fixed to a respective gripper strap T - in respect of the original position of said grippers with a new gripper strap T, said lateral displacement obviously being the greater the more severe the wear of the outer edge E of the gripper strap T.

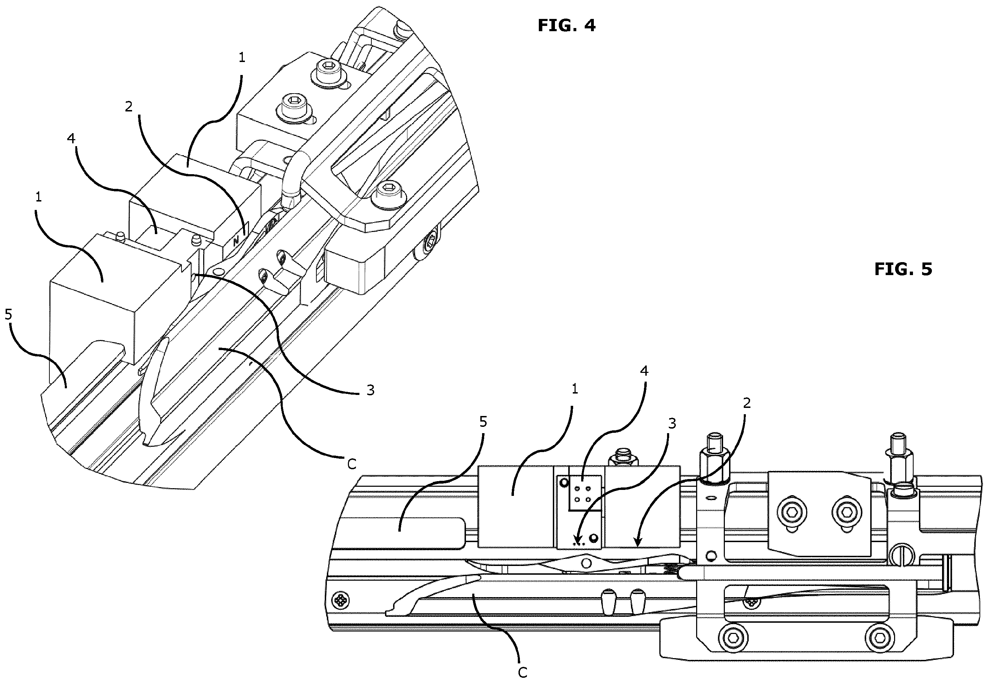

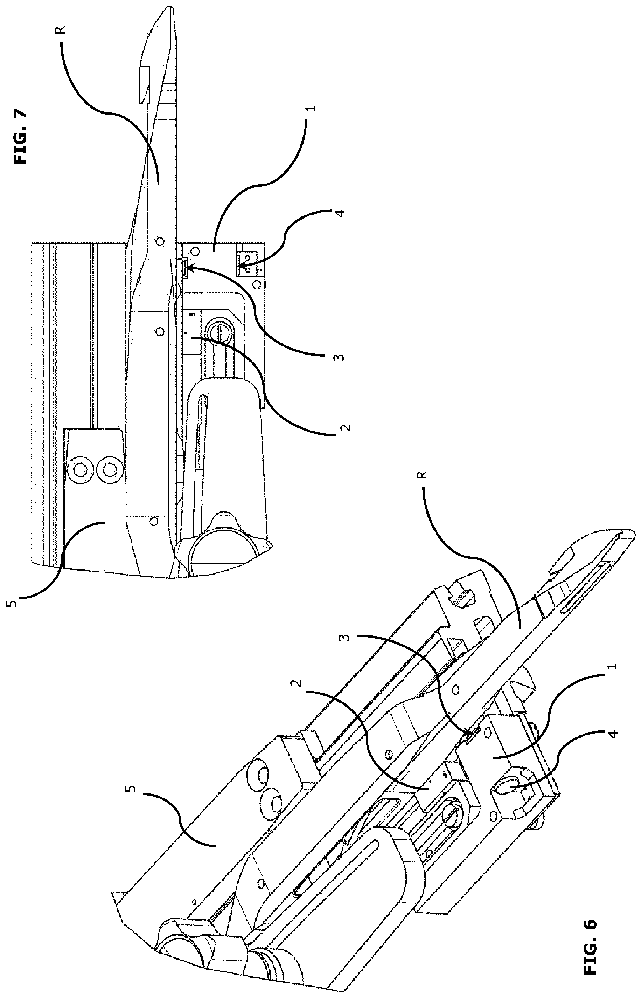

The wear monitoring device of the front portion of gripper straps T according to the invention is schematically illustrated in Figs. 4, 5 for a carrying gripper C, and in Figs. 6, 7 for a drawing gripper R. The monitoring device includes a support 1 mounted in a convenient position lateral to the gripper path, on which support one or more magnets 2 are arranged (permanent magnets or electromagnets, where the latter can therefore be activated even just during periods of wear measurement) which attract the carrying gripper C or the drawing gripper R therefore causing their displacement towards the support 1. Finally a magnetometer 3, such as for example a Hall effect sensor, which detects the magnetic flux value in a magnetic field generated by the magnets 2 which attract the grippers or by a dedicated auxiliary magnet 4, the flux lines of said magnetic field crossing the gripper path and being preferably orthogonal to the movement direction of the grippers. The auxiliary magnet 4 can be placed as well in the support 1 or, alternatively, on board the carrying gripper C or the drawing gripper R.

The monitoring of the gripper strap wear condition can be implemented at any time, and therefore also during a loom normal operation. However, a monitoring implemented while the loom grippers are moved at "slow speed" mode - and therefore, for example, during all the operations of finding and repairing a wrong weft thread - allows more precise measurements, as such monitoring is not disturbed by possible dynamic effects caused by the high-speed movement of the grippers. In fact, since the gripper strap wear is anyhow a relatively slow phenomenon, even an irregular detection of the gripper strap wear condition, occasionally implemented when the loom is operated at "slow speed" for other reasons is more than sufficient to allow an effective control of the wear condition and to provide timely replacement of the gripper strap before its wear can lead to an unwanted increase of wrong wefts or even breakages of the mechanical members intended for insertion of the weft threads in the shed.

In the final stretch of the return run of the grippers to their limit stop position outside the shed - and more precisely in the area, free from other devices, where support 1 is mounted, which area is comprised between a gripper opening device 5 and the warp shed - the magnets 2 attract the carrying gripper C or the drawing gripper R and cause their lateral displacement towards the support 1, such displacement being proportional to the actual clearance P at the monitoring time. The extent of the lateral displacement of the gripper is calculated by the magnetometer 3 by detecting the variations in the magnetic flux induced by the magnets 2 and/or 4, when the grippers, or more precisely their ferromagnetic components, pass in front of said magnetometer 3. When the gripper strap is new, the clearance P has a minimum value, and precisely a value such as to allow a smooth sliding of the gripper strap edge E in the respective guide elements G, as illustrated in Fig. 3A; such minimum value of the clearance P is used as a starting reference value indicating absence of wear. When the gripper strap begins to be worn, the clearance P progressively increases from said minimum value and is therefore directly representative of the wear of the gripper strap front portion.

Therefore, by automatically and regularly monitoring the electrical signal output from the magnetometer 3, it is possible to have a clear indication of the progressive wear of the gripper straps at their front portion, i.e. where the outer edge E of said gripper straps can be subject to faster wear than in other portions of the gripper strap.

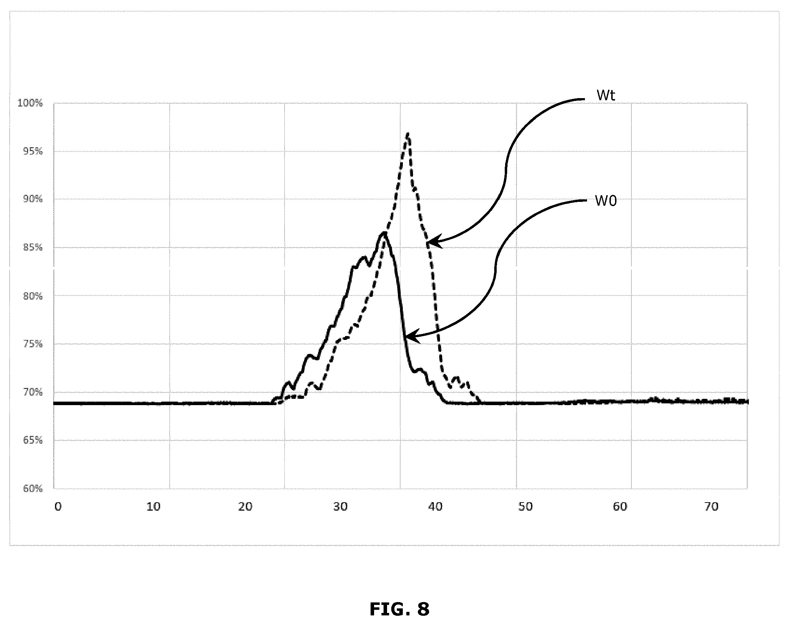

Fig. 8 reports in a graph the percentage value of the magnetic flux (in ordinates) detected by the magnetometer 3 on a carrying gripper C, as a function of the gripper position (in abscissae) expressed as degrees of advancement of a loom work cycle. In the graph, the carrying gripper C position is expressed as a movement in the direction of motion in the neighbourhood of the magnetometer 3. The graph shows:
- a reference curve WO, representing the trend of the magnetic flux detected by the magnetometer 3 for a carrying gripper C mounted on a new gripper strap, and therefore in absence of wear; and
- a curve Wt detected in a completely equivalent way on the same gripper strap, after a working time t, and therefore with an increased clearance P due to wear between the gripper strap outer edge E and its relative guide element G.

From an examination of the two curves, it is immediately notable a significant increase in the magnetic flux in the worn strap, after a working time t, determined by the greater proximity of the gripper to the magnetometer 3 caused by the increased clearance P. The existing relationship between the variation over time of the magnetic flux detected by the magnetometer 3 and the corresponding variation of the clearance P can be easily determined experimentally when installing the monitoring device on a specific type of loom and grippers, thus making it possible to activate a warning signal when the increase in magnetic flux W, i.e. the difference between the magnetic flux Wt at time t and the magnetic flux WO detected by the magnetometer 3 at time 0, i.e. on a new gripper strap T and then in absence of wear, exceeds a predetermined value. Such predetermined value corresponds to a limit value of the clearance P in correspondence with the gripper strap front portion, i.e., at the maximum permissible approach of the gripper to the magnetometer 3 (to which corresponds the full scale value of 100% in Fig. 8), beyond which the risk of weaving defects or of mechanical part breakages exceeds a predefined safety level, and it is therefore necessary to replace the gripper strap.

In addition to the performances described above in measuring the wear condition of the outer edge of the gripper straps, the monitoring device of the present invention is also capable of providing information of considerable interest and precision on the exact position of the gripper with respect to the known position of the magnetometer 3 or even with respect to the usual scale of measure in loom degrees (0°-360° for a complete weft insertion cycle).

From the previous description it is evident that the monitoring device of the present invention has fully achieved the intended objects. First of all, as a matter of fact, the monitoring device of the present invention detects the wear condition in a completely automatic way, both in the high speed weaving phase of the loom and in the slow speed repair periods; therefore said monitoring device does neither require any additional intervention on the part of the workers, nor the loom to be stopped or the gripper straps unmounted. The monitoring device is also extremely compact and small sized, so that it can be easily accommodated in a position between the weft insertion/release area and, respectively, the entry into the shed and the exit from the shed. Finally, since the wear detection is based on a magnetic flux measurement, the monitoring device of the invention does not require direct contact with the object to be measured, and it also allows to completely eliminate all the drawbacks suffered by the usual optical sensors, since said wear detection is completely insensitive to dust and light conditions, further offering a high degree of precision and reliability.

It is understood, however, that the invention should not be considered as limited to the specific arrangements illustrated above, which are only exemplary embodiments thereof, but that different variants are possible, all within the reach of a person skilled in the art, without thereby departing from the scope of protection of the invention itself, which is only defined by the following claims.

## Claims

1. Gripper weaving loom provided with a wear monitoring device of the front portion of a control strap (T) of a carrying gripper (C) or of a drawing gripper (R) of said weaving loom, **characterized in that** said wear monitoring device includes a magnetometer (3) arranged in the proximity of the path of said carrying gripper (C) or said drawing gripper (R), and one or more magnets (2) causing said carrying gripper (C) or said drawing gripper (R) to move in abutment against respective guide means (G) during their passage in front of the magnetometer (3), said magnetometer (3) detecting during said passage the magnetic flux variations in an induced magnetic field having flux lines which cross the path of said carrying gripper (C) or of said drawing gripper (R).

2. Gripper weaving loom provided with a wear monitoring device of a gripper strap according to claim 1, wherein said magnetic field is induced by said one or more magnets (2) or by an auxiliary magnet (4).

3. Gripper weaving loom provided with a wear monitoring device of a gripper strap according to claim 2, wherein said magnetometer (3) and said one or more magnets (2) are arranged in a single support (1) positioned laterally to the path of said carrying gripper (C) or said drawing gripper (R).

4. Gripper weaving loom provided with a wear monitoring device of a gripper strap according to claim 3, wherein said auxiliary magnet (4) is arranged in said single support (1) or on said carrying gripper (C) or on said drawing gripper (R).

5. Gripper weaving loom provided with a wear monitoring device of a gripper strap according to claim 3, wherein said single support (1) is arranged in an area between a gripper opening device (5) and the warp shed.

6. Gripper weaving loom provided with a wear monitoring device of a gripper strap according to claim 1, wherein the main surface of said magnetometer (3) is arranged in a plane parallel to the path of the carrying gripper (C) or the drawing gripper (R), and wherein the flux lines of said magnetic field are perpendicular to said path.

7. Gripper weaving loom provided with a wear monitoring device of a gripper strap according to claim 1, wherein said wear monitoring device automatically and regularly monitors the electrical signal output from the magnetometer (3) when the weaving loom is running, i.e. the trend over time of the magnetic flux (W) induced by said magnets (2, 4) and measured by said magnetometer (3) during the passage of the carrying gripper (C) or the drawing gripper (R) in front of said monitoring device, to have a clear indication of the progressive wear of the gripper straps at their front portion.

8. Gripper weaving loom provided with a wear monitoring device of a gripper strap according to claim 7, wherein said wear monitoring device detects the gripper strap (T) wear condition at time as the difference between the magnetic flux (Wt) at time t and the magnetic flux (W0) detected by the magnetometer (3) on a new gripper strap (T), i.e. in absence of wear, and wherein said wear monitoring device sends a warning signal when said difference exceeds a predetermined value.

9. Gripper weaving loom provided with a wear monitoring device of a gripper strap according to any one of the preceding claims, wherein said magnetometer (3) is a Hall effect sensor.

10. Gripper weaving loom provided with a wear monitoring device of a gripper strap according to any one of the preceding claims, wherein said monitoring device further provides information on the exact position of the gripper with respect to the known position of said magnetometer (3) or with respect to a scale of measure ranging from 0° to 360° loom degrees for a complete work cycle of the loom.

## Patentansprüche

1. Greifer-Webmaschine, die mit einer Vorrichtung zur Überwachung des Verschleißes des vorderen Teils eines Steuerriemens (T) eines Tragegreifers (C) oder eines Zuggreifer (R) der Webmaschine versehen ist, **dadurch gekennzeichnet, dass** die Vorrichtung zur Überwachung der Abnutzung ein Magnetometer (3) umfasst, das in der Nähe des Weges des Tragegreifers (C) oder des Zuggreifer (R) angeordnet ist, und einen oder mehrere Magnete (2), die bewirken, dass sich der Tragegreifer (C) oder der Zuggreifer (R) während ihres Durchgangs vor dem Magnetometer (3) in Anlage gegen entsprechende Führungsmittel (G) bewegt, wobei das Magnetometer (3) während des Durchgangs die Magnetflussänderungen in einem induzierten Magnetfeld mit Flusslinien erfasst, die den Weg des Tragegreifers (C) oder des Zuggreifer (R) kreuzen.

2. Greifer-Webmaschine mit Greifer-Riemen-Verschleißüberwachungsvorrichtung gemäß Anspruch 1, wobei das Magnetfeld durch den einen oder die mehreren Magnete (2) oder durch einen Hilfsmagneten (4) induziert wird.

3. Greifer-Webmaschine mit Greifer-Riemen-Verschleißüberwachungsvorrichtung gemäß Anspruch 2, wobei das Magnetometer (3) und der eine oder die mehreren Magnete (2) in einem einzigen Träger (1) angeordnet sind, der seitlich zum Weg des Tragegreifers (C) oder des Zuggreifer (R) positioniert ist.

4. Greifer-Webmaschine mit Greifer-Riemen-Verschleißüberwachungsvorrichtung gemäß Anspruch 3, wobei der Hilfsmagnet (4) in dem einzigen Träger (1) oder an dem Tragegreifer (C) oder an dem Zuggreifer (R) angeordnet ist.

5. Greifer-Webmaschine mit Greifer-Riemen-Verschleißüberwachungsvorrichtung gemäß Anspruch 2, wobei der Einzelträger (1) in einem Bereich zwischen einer Greiferöffnungsvorrichtung (5) und dem Kettfach angeordnet ist.

6. Greifer-Webmaschine mit Greifer-Riemen-Verschleißüberwachungsvorrichtung gemäß Anspruch 1, wobei die Hauptfläche des Magnetometers (3) in einer Ebene parallel zum Weg des Tragegreifers (C) oder des Zuggreifers (R) angeordnet ist und wobei die Flusslinien des Magnetfeldes senkrecht zu diesem Weg verlaufen.

7. Greifer-Webmaschine mit Greifer-Riemen-Verschleißüberwachungsvorrichtung gemäß Anspruch 1, wobei die Verschleißüberwachungsvorrichtung automatisch und regelmäßig das elektrische Signal überwacht, das von dem Magnetometer (3) abgegeben wird, während die Webmaschine läuft, d.h. den zeitlichen Verlauf des von den Magneten (2, 4) induzierten und von dem Magnetometer (3) gemessenen magnetischen Flusses (W) während des Vorbeilaufens des Tragegreifers (C) oder des Zuggreifers (R) vor der Überwachungsvorrichtung, um eine klare Anzeige des fortschreitenden Verschleißes der Greifer-Riemen in ihrem vorderen Abschnitt zu erhalten.

8. Greifer-Webmaschine mit Greifer-Riemen-Verschleißüberwachungsvorrichtung gemäß Anspruch 7, wobei die Verschleißüberwachungsvorrichtung den Verschleißzustand des Greifer-Riemens (T) zum einem Zeitpunkt als die Differenz zwischen dem magnetischen Fluss (Wt) zum Zeitpunkt t und dem magnetischen Fluss (Wo), der durch das Magnetometer (3) an einem neuen Greifer-Riemen (T) erfasst wird, d.h. bei Abwesenheit von Verschleiß, und wobei die Verschleißüberwachungsvorrichtung ein Warnsignal abgibt, wenn die Differenz einen vorbestimmten Wert überschreitet.

9. Greifer-Webmaschine mit Greifer-Riemen-Verschleißüberwachungsvorrichtung gemäß einem der vorhergehenden Ansprüche, wobei das Magnetometer (3) ein Hall-Effekt-Sensor ist.

10. Greifer-Webmaschine mit Greifer-Riemen-Verschleißüberwachungsvorrichtung gemäß einem der vorhergehenden Ansprüche, wobei die Überwachungsvorrichtung ferner Informationen über die genaue Position des Greifers in Bezug auf die bekannte Position des Magnetometers (3) oder in Bezug auf eine Messskala im Bereich von 0° bis 360° Webmaschinengrad für einen vollständigen Arbeitszyklus der Webmaschine bereitstellt.

## Revendications

1. Métier à tisser à pinces équipé d'un dispositif de surveillance de l'usure de la partie avant d'une sangle de commande (T) d'une pince de transport (C) ou d'une pince d'étirage (R) dudit métier à tisser, **caractérisé en ce que** ledit dispositif de surveillance de l'usure comprend un magnétomètre (3) agencé à proximité de la trajectoire de ladite pince de transport (C) ou de ladite pince d'étirage (R), et un ou plusieurs aimants (2) permettant à ladite pince de transport (C) ou à ladite pince d'étirage (R) de se déplacer en butée contre des moyens de guidage (G) respectifs lors de leur passage devant le magnétomètre (3), ledit magnétomètre (3) détectant, lors dudit passage, les variations du flux magnétique dans un champ magnétique induit présentant des lignes de flux qui traversent la trajectoire de ladite pince de transport (C) ou de ladite pince d'étirage (R).

2. Métier à tisser à pinces doté d'un dispositif de surveillance de l'usure d'une sangle de pince selon la revendication 1, dans lequel ledit champ magnétique est induit par lesdits un ou plusieurs aimants (2) ou par un aimant auxiliaire (4).

3. Métier à tisser à pinces doté d'un dispositif de surveillance de l'usure d'une sangle de pince selon la revendication 2, dans lequel ledit magnétomètre (3) et lesdits un ou plusieurs aimants (2) sont agencés dans un unique support (1) positionné latéralement à la trajectoire de ladite pince de transport (C) ou de ladite pince d'étirage (R).

4. Métier à tisser à pinces doté d'un dispositif de surveillance de l'usure d'une sangle de pince selon la revendication 3, dans lequel ledit aimant auxiliaire (4) est agencé dans ledit unique support (1) ou sur ladite pince de transport (C) ou sur ladite pince d'étirage (R).

5. Métier à tisser à pinces doté d'un dispositif de surveillance de l'usure d'une sangle de pince selon la revendication 3, dans lequel ledit unique support (1) est agencé dans une zone entre un dispositif d'ouverture de pince (5) et la foule de chaîne.

6. Métier à tisser à pinces doté d'un dispositif de surveillance de l'usure d'une sangle de pince selon la revendication 1, dans lequel la surface principale dudit magnétomètre (3) est agencée dans un plan parallèle à la trajectoire de la pince de transport (C) ou de la pince d'étirage (R), et dans lequel les lignes de flux dudit champ magnétique sont perpendiculaires à ladite trajectoire.

7. Métier à tisser à pinces doté d'un dispositif de surveillance de l'usure d'une sangle de pince selon la revendication 1, dans lequel ledit dispositif de surveillance de l'usure surveille automatiquement et régulièrement la sortie de signal électrique du magnétomètre (3) lorsque le métier à tisser est en marche, c'est-à-dire la tendance dans le temps du flux magnétique (W) induit par lesdits aimants (2, 4) et mesuré par ledit magnétomètre (3) lors du passage de la pince de transport (C) ou de la pince d'étirage (R) devant ledit dispositif de surveillance, pour avoir une indication claire de l'usure progressive des sangles de pince sur leur partie avant.

8. Métier à tisser à pinces équipé d'un dispositif de surveillance de l'usure d'une sangle de pince selon la revendication 7, dans lequel ledit dispositif de détection de l'usure détecte l'état d'usure de la sangle de pince (T) à un instant donné comme étant la différence entre le flux magnétique (Wt) à l'instant t et le flux magnétique (WO) détecté par le magnétomètre (3) sur une nouvelle sangle de pince (T), c'est-à-dire en l'absence d'usure, et dans lequel ledit dispositif de surveillance de l'usure envoie un signal d'avertissement lorsque ladite différence dépasse une valeur prédéterminée.

9. Métier à tisser à pinces doté d'un dispositif de surveillance de l'usure d'une sangle de pince selon l'une des revendications précédentes, dans lequel ledit magnétomètre (3) est un capteur à effet Hall.

10. Métier à tisser à pinces doté d'un dispositif de surveillance de l'usure d'une sangle de pince selon l'une des revendications précédentes, dans lequel ledit dispositif de surveillance fournit en outre des informations sur la position exacte de la pince par rapport à la position connue dudit magnétomètre (3) ou par rapport à une échelle de mesure allant de 0° à 360° de métier pour un cycle de travail complet du métier.
